Europäisches Patentamt

European Patent Office

Office européen des brevets

(19)

(11) Publication number: **0 316 666**

**A1**

(12) **EUROPEAN PATENT APPLICATION**

(21) Application number: 88118312.3

(22) Date of filing: 03.11.88

(51) Int. Cl.⁴: **C08J 5/12 , B60C 21/00 , B29D 30/56**

(30) Priority: 13.11.87 US 121566

(43) Date of publication of application:
24.05.89 Bulletin 89/21

(84) Designated Contracting States:
DE ES FR GB IT SE

(71) Applicant: THE FIRESTONE TIRE & RUBBER
COMPANY
1200 Firestone Parkway
Akron, Ohio 44317(US)

(72) Inventor: Hausch, Walter R.
327 Caladonia Avenue
Akron Ohio 44313(US)
Inventor: Koch, Russel W.
2135 Howard Street
Hartville Ohio 44632(US)

(74) Representative: Kraus, Walter, Dr. et al
Patentanwälte Kraus, Weisert & Partner
Thomas-Wimmer-Ring 15
D-8000 München 22(DE)

(54) **Amine curable prepolymer or polymer precured elastomer tread application at ambient or relatively low temperatures.**

(57) A composition and process for applying and adhering a cured elastomer tread to a cured elastomer article such as a tire at an ambient or a relatively low temperature. The tire is buffed, ground, and otherwise reduced to a suitable depth for the application of the tread thereto. An adhesive system includes a treating agent such as a N-halohydantoin, a N-haloamide, and N-haloimide, or a N-halosulfonamide, which is applied to the prepared tire surface. The adhesive system also includes an amine curable polymer or prepolymer containing an amine curing agent therein and an optional polar solvent is applied to the treated tire surface and to the elastomeric tire tread. The tire tread is then applied to the prepared tire and cured at a relatively low or ambient temperatures. Various additives can be added to the amine curable polymer or prepolymer and/or treating agent or to the tire and tread surface to improve adhesion of the tread to the tire carcass. The invention is suitable for passenger vehicle type tires, off-the-road type tires, and the like.

EP 0 316 666 A1

# AMINE CURABLE PREPOLYMER OR POLYMER PRECURED ELASTOMER TREAD APPLICATION AT AMBIENT OR RELATIVELY LOW TEMPERATURES

## FIELD OF THE INVENTION

The present invention relates to an elastomer article to which an elastomer tread material has been applied to an ambient or a relatively low temperature utilizing an adhesive system containing an amine curable polymer or prepolymer, an amine curing agent, an optional polar solvent, and a treating agent.

## BACKGROUND ART

Heretofore, tires have been retreaded utilizing various conventional or rubber type, that is non-urethane type adhesive systems.

U.S. Patent Nos. 3,755,261 to VanGulick; 3,888,831 to Kogan; 3,834,934 to Broisman; 3,644,256 to Broisman; and 3,718,587 to Bhakuni relate to amine curable curing agents, amine curable polymers, or R.F.L. type adhesives.

U.S. Patent No. 3,779,794 to DeSantis relates to a moisture-curable polyurethane sealant primer system, whereas U.S. Patent 4,085,283 to DenOtter relates to flame retardants which are cyanuric acid derivatives.

Product No. PS-2682-71 of the Hughson Chemical Division, Lord Corporation, relates to a surface primer for elastomeric substances utilizing a proprietary compound thought to be mono- or di-chloroisocyanuric acid.

An article entitled "Room Temperature Vulcanizing Adhesive Based on Ethylene-Propylene Diene Terpolymer," Cantor, Uniroyal, Paper No. 18, presented to the Division of Colorado, October 10, 1973, relates to various oxidants which effect ambient temperature cures of E.P.D.M.

U.S. Patent No. 4,136,219 to Odam relates to a polyurethane paint which is applied to vulcanized rubbers.

British Patent No. 1,352,645 relates to a polyurethane paint which is applied to vulcanized rubbers.

U.S. Patent 4,125,522 to Becker relates to a polyurethane adhesive.

U.S. Patent No. 3,966,530 to Cutts relates to triazoline diones which are utilized in lieu of chlorinated or halogenated donors for treating elastomeric surfaces to improve adhesion.

U.S. Patent No. 3,143,156 to Fagert relates to utilizing a non-fully cured plug to repair an aperture extending entirely through a tire.

U.S. Patent No. 4,143,454 to Utsonomiya relates to a method of attaching connecting parts of an offshore structure wherein a liquid rubber is applied over a treating solution which can contain a halogen molecule.

U.S. Patent No. 4,158,378 to Pearson relates to a cured chlorine water treatment step.

U.S. Patent No. 3,991,255 to Blaskjiewicz relates to the adhesion of a polyurethane to an EPDM surface utilizing various adhesives.

U.S. Patent No. 4,300,970 to Honda relates to a method of bonding vulcanized rubber to resin.

U.S. Patent No. 4,240,852 to Gomberg relates only to the use of a cyanoacrylate adhesive.

U.S. Patent No. 4,352,704 to Williams relates to applying tire tread to a tire.

U.S. Patents 4,327,138 and 4,399,852 to Hausch relate to a composition and process for applying and bonding a curable polymer or prepolymer at ambient temperature to the surface of a cured elastomer substrate. The application of polyurethane lugs or polyurethane treads to a tire is also disclosed.

U.S. Patents 4,401,145 and 4,311,181 to Hausch relate to the application to an indicia as to a tire substrate.

U.S. Patents 4,434,832 to Koch and Barbin, 4,485,135 to Koch, and 4,485,136 to Koch and Hausch relate to ambient temperature cure of elastomers having a hollow therein as well to the utilization of a patch.

U.S. Patent 4,465,535 to Koch, Fieldhouse and Oziomek relates to the use of a specific solvent, 1,4-dichloroethane, utilized in connection with a treating agent.

U.S. Patent No. 4,435,456 to Hausch relates to the process and composition for repairing a hollow at ambient temperature in the surface of a cured elastomer substrate, as well as to applying a urethane tread to a tire.

U.S. Patent No. 4,544,427 to Hausch relates to the use of a polyisocyanate as a layer in repairing an elastomer article, as well as to applying a urethane treat to a tire.

French Patent 2,210,508 to E.I. Du Pont relates to a polyisocyanate coating on roughened rubber to adhere a urethane to the rubber.

## SUMMARY OF THE INVENTION

It is therefore an aspect of the present invention to provide a cured elatomer article, such as a tire, having a cured elastomeric tread adhered thereto by an adhesive system or laminate. The adhesive laminate comprises a treating agent applied to the article as well as to the tread, and an intermediate amine curable polymer or prepolymer layer which also contains an amine curing agent, and an optional polar solvent. The treating agent is generally an organic oxidant such as an N-halosulfonamide, a N-halohydantoin, a N-haloamide, or an N-haloimide with the various isomers of mono-, di-, and trichloroisocyanuric acid being preferred. Of the various amine curable polymers or prepolymers, the urethanes are preferred. The polar solvent is often utilized with the urethane polymer or prepolymer so that a liquid system is obtained which cures at ambient or relatively low temperatures. Various additives can be added to the amine curable polymer or prepolymer to form a stronger adhesive bond such as epoxy, and the like.

## BRIEF DESCRIPTION OF THE DRAWINGS

Fig. 1 is a cross sectional view of a tire having a tread applied thereto in accordance with the present invention;

Fig. 2 is a cross-sectional view of the retreaded tire taken on line 2-2 of Fig. 1.

## DETAILED DESCRIPTION

The elastomer base or substrate of the present invention is a cured elastomer article such as a hose, a conveyor belt, rubber boots, etc., and especially a tire. The cured elastomer article is made from polymers which generally contain unsaturated sites therein. In effect, they are made from various elastomer-forming monomers. One such class of monomers are the various conjugated dienes having from 4 to 12 carbon atoms. Specific examples of diene monomers include butadiene, isoprene, pentadiene, hexadiene, heptadiene, octadiene, 2,3-dimethyl-1,3-butadiene, 2-methyl-1,3-pentadiene, and the like. Preferred conjugated elastomers are made from monomers of butadiene and/or isoprene. Moreover, natural rubber can be utilized. By the term "natural rubber," it is meant the elastomeric substance obtained from various trees and plants which generally grow in the tropics or desert portions of the world. Such material contains a very high content (in excess of 90 percent and often in excess of 95 percent) of cis-1,4-polyisoprene. Also included within the class of conjugated dienes are the various copolymers and interpolymers thereof (e.g., polybutadiene-isoprene), including the various diblock copolymers, triblock copolymers (e.g., polystyrenebutadiene-styrene), and the like.

Another group of useful elastomers includes the various copolymers made from monomers of conjugated dienes having from 4 to 12 carbon atoms as set forth above and vinyl substituted aromatic compounds containing from 8 to 15 carbon atoms. Examples of specific vinyl substituted aromatic compounds include styrene, alpha-methylstyrene, 4-t-butylstyrene, vinyl toluene, divinyl benzene, isopropenyl benzene, diisopropenyl benzene, and the like. Examples of specific copolymers thus include polystyrene-butadiene (SBR), poly-alpha-methyl-styrene-butadiene, and poly-4-t-butylstyrene-butadiene. A preferred copolymer is a polystyrene-butadiene.

Although at times the following rubber compounds can be utilized, they are not as desirable as the above elastomer-forming monomers. Thus, butyl rubbers can be utilized which are a copolymer of isobutylene and a small amount of isoprene. Neoprene, that is polychloroprene (2-chloro-1,3-butadiene), can also be utilized. Still another class of elastomer rubbers are the nitrile rubbers, that is copolymers made from dienes as set forth above having from 4 to 12 carbon atoms with acrylonitrile monomers. Usually, the

3

ratio of the two monomers in nitrile rubber is similar to the ratio of butadiene to styrene in styrene-butadiene rubber.

Blends of the above said rubbers can also be used. The above elastomers can be prepared according to conventional methods known to those skilled in the art as well as to the literature.

The cured elastomer article which is preferably a tire and more particularly, a worn tire (i.e., a tire carcass), is prepared for application of a cured elastomer tread thereto through utilization of an adhesive system. By the term "tread" it is meant a cured elastomer layer which is applied to a substrate such as a conveyor belt, a rubber hose, and preferably a tire. With regard to the application of a tire, such elastomer layer is referred to at times as a "retread" inasmuch as a tread layer is once again being applied to a tire. Regardless of the type or nature of the substrate, it is desirable to clean the surface thereof as by buffing and/or treatment with a conventional organic solvent prior to the application of the treating agent.

The treating agent is desirably a halogen containing oxidant. Treatment of the elastomer or rubber substrate can be effected by the various N-halosulfonamides, the various N-halohydantoins, the various N-haloamides, and the various N-haloimides. Examples of various desirable N-halosulfonamides include N,N,N',N'-tetra-chloro-oxybis(benzenesulfonamide); N,N,N',N'-tetra-chloro-4,4-biphenyl disulfonamide. N,N,N',N'-tetra-chloro-1,3-benzene disulfonamide; and N,N,N',N'-tetra-bromo-oxybis (benzenesulfonamide). Examples of various desirable N-halohydantoins include 1,3-dichloro-5,5-dimethyl hydantoin; 1,3-dibromo-5,5-dimethyl hydantoin; 1,3-dichloro-5-methyl-5-isobutyl hydantoin; and 1,3-dichloro-5-methyl-5-hexyl hydantoin. Examples of N-haloamides include N-bromoacetamide and tetrachloroglyculuril. Examples of N-haloimides include N-bromosuccinimide and the various mono-, di- and trichloroisocyanuric acids. A preferred treating composition for use in the practice of the present invention are the various chloro substituted triazinetriones, commonly known as mono-, di-, or trichloroisocyanuric acids, or combina tions thereof. Trichloroisocyanuric acid (trichloro-S-triazinetrione) is especially preferred.

Although some of these oxidant treating compounds are usually solid, they are soluble or dispersible in solvents, such as those noted below, and thus exist in a liquid form that can be utilized.

The treating agent can be applied to the cured rubber substrate as a liquid or a solution in an organic inert solvent in a sufficient amount to coat the substrate surface in any conventional manner as through brushing or spraying. Preferably, two or more coats of the treating agent compound are used to ensure that all of the cured rubber substrate surface has been coated. By way of convenience, the halogen containing oxidant treating system can be applied with a suitable solvent such as ethyl acetate or acetone in an amount of from 0.1 to 10 percent by weight and preferably from about 0.5 percent to about 5 percent by weight based upon the total weight of the solvent and the treating agent. The treating agent system generally dries within a matter of minutes so that the amine curable polymer or prepolymer compound can then be bonded thereto. The treating agent adds halogen groups, for example, chlorine, to the cured rubber which activates the cured rubber surface allowing the amine curable polymer or prepolymer to form a strong bond therewith.

Of the various amine curable polymers or prepolymers which can be utilized, the urethanes are preferred. Other prepolymers or polymers which can be cured with the amine curing agent include the various compounds set forth in U.S. Patent No. 3,755,261 which is hereby fully incorporated by reference. Briefly, such compounds are the various epoxy resins such as those disclosed in the "Encyclopedia of Polymer Science and Technology" Interscience Publishers, New York (1967), Volume 6, pages 212-221; halogen-containing hydrocarbon polymers such as chloroprene polymers, chlorinated butyl rubber, and chlorinated polyethylene and polypropylene; chlorsulfonated polymers such as those described in U.S. Patent No. 2,723,257; polymers containing acid halide groups, such as

$$-\overset{\overset{\displaystyle O}{\displaystyle \|}}{\underset{\displaystyle }{C}}-Cl$$

and haloformate groups such as

$$-O-\overset{\overset{\displaystyle O}{\displaystyle \|}}{\underset{\displaystyle }{C}}-Cl;$$

polymers containing anhydride groups which on reaction with diamines yield amide-acid linkages; and organopolysiloxanes as described in U.S. Patent No. 2,938,010.

The urethane prepolymers or polymers, that is those which contain isocyanate groups, are generally formed by first reacting a polyether polyol or a polyester polyol with a molar excess of an organodiisocyanate to form a prepolymer having terminal isocyanate groups. The polymer is then cured to increase its molecular weight from generally less than 3,000 to usually over 10,000. Examples of such polymers are set forth in U.S. Patent Nos. 2,620,516; 2,777,831; 2,843,568; 2,866,774; 2,900,368; 2,929,800;

2,948,691; 2,948,707; and 3,114,735, all of which are hereby fully incorporated by reference. Typical specific examples of such polyurethanes include Adiprene L-367, a polytetramethylene ether glycol containing approximately 6.4 percent isocyanate end groups by weight, manufactured by Uniroyal Chemical Co.; Adiprene L-42, a polytetramethylene ether glycol containing approximately 2.8 percent isocyanate end groups by weight, manufactured by Uniroyal Chemical Co.; and Cyanaprene A-7, a polyester-based coating polymer with approximately 2.4 percent isocyanate end groups, manufactured by American Cyanamid. Blends of these polyurethanes can also be utilized.

The amine curable polymer or prepolymer is cured with an amine curing agent. Although generally any conventional or known amine curing agent can be utilized as known to the art and to the literature, including the various Versamides (manufactured by Henkel Chemical Company), that is the condensation products of polyamides and dibasic acids when certain unsaturated fatty acids are polymerized, MOCA, that is 4,4'-methylene bis(2-chloroaniline) and the like, a metal salt complex of 4,4'-methylene dianiline, that is MDA, is preferred. The various metal salt complexes of MDA, which are commercially available as Caytur 21 from DuPont, and the methods of preparing the same are described in U.S. Patent No. 3,755,261 which is hereby fully incorporated by reference. A lithium chloride salt thereof is desired with a sodium chloride salt thereof being highly preferred. An equivalent amount of the amine curing agent with respect to the amine curable polymer or prepolymer is from about .85 to about 1.1 and preferably from about .95 to about 1.05.

Often to facilitate processing, the curing agent, and especially an amine curing agent such as the complex of 4,4'-methylene dianiline and a salt is utilized with a plasticizer such as dioctylphthalate on a 50 percent weight basis, or Flexol 4-GO, tetraethylene glycol bis(2-ethyl hexanoate) manufactured by Union Carbide Corporation on a 50 percent weight basis.

The curing agent is blended with the amine curable prepolymer or polymer in various mixers such as dough mixers, high speed impellers, paddle-type mixers, and the like. Small batches can be mixed by stirring with a spatula. Usually, the prepolymer or polymer is a liquid. If not, when mixed with the polar solvent discussed hereinbelow, a liquid mixture results. Depending upon the type of amine curing agent, it can be a liquid or a solid. However, even if a solid curing agent is used, when added to the prepolymer or the polymer, and to a solvent system, a liquid system results even though the curing agent (e.g. amine) can be in the form of a dispersion. Thus, even though the system may contain solids therein, the solids exist in the form of a dispersion so that a liquid system is produced.

According to the present invention, the use of an optional polar solvent with either the treating agent, the amine curable polymer or prepolymer, or the amine curing agent is often utilized to help obtain an ambient temperature cure of the amine curable polymer or prepolymer, that is cure at a temperature of from about 10° C to about 50° C and more desirably in a range of from about 15° C to about 35 to 40° C. According to the present invention, cure is also obtained at a relatively low temperature. That is, from an ambient temperature, as from about 35° C, 40° C or 50° C up to about 135° or 150° C and more preferably from about 100° to about 125° C. The polar solvents which can be utilized with the amine curable polymers or prepolymers and the amine curing agent are set forth in U.S. Patent No. 3,888,831 to Kogon which is hereby fully incorporated by reference. Such solvents include those having dipole moments in excess of 0.4 debye in which there are no more than a total of eight methyl, methylene, or tertiary carbon radicals per polar group. Generally, the amount of solvent utilized per 100 parts by weight of the amine curable prepolymer or polymer is from about 2 to about 40, desirably from about 2 to about 20, and preferably from about 5 to about 15 parts by weight. Specific examples of preferred solvents include dimethylformamide, tetrahydrofuran, cyclohexanone, ethyl acetate, nitromethane, nitroethane, nitropropane, methyl ethylketone, and acetone. Acetone and methyl ethyl ketone are highly preferred.

According to the concepts of the present invention, a precured elastomer tread, that is a rubber layer, is applied to an elastomer substrate utilizing the above-noted adhesive system. Although the tread can be applied to various substrates, a preferred embodiment relates to the application of the tread to a tire substrate and hence shall be discussed with respect thereto. As shown in the drawings, a tire, generally indicated by the numeral 10, has a carcass or body 12. The carcass portion has previously been prepared as discussed hereinabove as by buffing so that a suitable bond thereto can be affected. Tire 10 can be any passenger tire, truck tire, off-the-road tire, or other conventional tire having the carcass portion contain a plurality of reinforcement cords or plies 14 therein. As known to those skilled in the art, the plies can be made of nylon, polyester, rayon, polyaramid, steel, and the like Tread portion 20 which is to be applied to the tire substrate can be made out of any conventional tread material as known to the art as well as to the literature. Generally, tread material 20 is a composition made from monomers similar if not identical to those utilized to form the tire carcass. Hence, the various monomers and polymers set forth hereinabove with regard to a rubber or elastomer substrate are hereby fully incorporated by reference. Desirably, tread 20 is made from a conjugated diene having from 4 to 12 carbon atoms, various copolymers thereof, natural rubber, as well as a copolymer of such a diene with a vinyl substituted aromatic compound having from 8 to 15 carbon atoms such as styrene. Naturally, the tread can contain various fillers and additives known to the art and to the literature such as carbon black, antiozonates, stabilizers, curatives, and the like.

Adhesive system 30 typically comprises an adhesive laminate. The adhesive laminate comprises a plurality of layers 32 of the treating agent and one or more layers 34 of the amine curable polymer or prepolymer. In the embodiment set forth in the drawings, the adhesive laminate contains a single amine curable polymer or prepolymer layer 34 and two treating agent layers 32. As best shown in Fig. 2, a treating agent layer resides on the tire carcass substrate 12. Similarly, a treating agent layer resides upon cured tread elastomer 20. The treating agent is desirably a liquid and is applied to the tire substrate and the cured tread in any conventional manner as by spraying, dipping, brushing, and the like. As noted above, generally a plurality of applications is made to ensure a sufficient treatment with and bond to the tire or tread substrate. An amine curable polymer or prepolymer of the type set forth hereinabove is then applied to either the treated tire substrate, the treated tread, or both. The amine curable polymer or prepolymer contains an amine curing agent therein such as MDA and often times a polar solvent. Once the amine curing agent has been mixed with the amine curable polymer or prepolymer and any polar solvent, it is applied immediately to the various desired substrates and the substrates brought together and applied to one another before any substantial cure of the amine curable polymer or prepolymer has taken place. This is, according to the concepts of the present invention, the amine curable polymer or prepolymer composition containing the amine curing agent, and the optional polar solvent, is applied to only substrate 12, to only tread 20, or to both, and the tread then applied, that is connected, contacted, placed on, etc., the substrate. The thickness of the amine curable polymer or prepolymer can vary but generally is from about 1 8 inch to about 3/16 inch. Although desirably the treating agent as well as the amine curable polymer or prepolymer is applied in a continuous layer, the layer can be discontinuous or contain void portions of such compounds. That is, the treating agent and the amine curable polymer or prepolymer can be applied in strips, spots, or other type of pattern. Various alignment guides can be utilized to be sure that the tread is properly aligned, such as an adhesive tape, staples, a tire mold, and the like. Cure generally occurs at an ambient temperature if a polar solvent is utilized, or at a relatively low temperature, that is up to about 150°C, if little or no polar solvent is utilized.

Variations of the above application can be utilized. For example, one of the treating agent layers can be applied to the urethane polymer or prepolymer layer. However, such is not desired. Moreover, various different layers or arrangements of the laminate can be utilized such as two or more amine curable polymer or prepolymer layers separated by a suitable treating agent layer, and the like.

Various polyisocyanates can generally be utilized to coat or form a layer on the treating agent or, less desirably, on the amine curable polymer or prepolymer to obtain better adhesion. Polyisocyanates which can be utilized generally have the formula $R(N = C = X)_n$ where n is 2 or 3, preferably 2. X is oxygen or sulfur, preferably oxygen, and R is an alkyl having from 2 to 20 carbon atoms, a cycloalkyl having from 4 to 20 carbon atoms, an aromatic or an alkyl substituted aromatic having from 6 to 20 carbon atoms. Examples of polyisothiocyantes (i.e., where X is sulfur) include meta- or paraphenylene diisothiocyanate, diphenyl methane diisothiocyanate, the various dianisidine diisothiocyanates, the various toluene diisothiocyanates, the various hexamethylene diisothiocyanates, and the like. Specific examples of diisocyanates include meta- or paraphenylene diisocyanate, the various diphenyl methane diisocyanates, the various bitolylene diisocyanates, the various dianisidine diisocyanates, the various isophorone diisocyanates, the various toluene diisocyanates, the various hexamethylene diisocyanates, and the various pentamethylene diisocyanates. Since isocyanate solutions, even in the presence of solvents, tend to be somewhat viscous, low viscosity diisocyanates are preferred.

An important aspect of the present invention is that the application of the cured elastomer tread to a cured elastomer substrate utilizing the adhesive system of the present invention can occur in situ. That is, a worn tire need not be shipped to a local factory for application of a tread thereto but rather can take place "on site" where vehicles are being utilized such as at a road construction site, at a mine site, and the like, so long as the tire can be adequately prepared, e.g., buffed.

Although the above application of a tread has been described with regard to a tire, as noted above, the substrate can be a conveyor belt, a rubber hose, or the like. As a practical matter, often times a seal, barrier, etc. is applied to the substrate in the vicinity of the tread material to be applied thereto so that the liquid amine curable polymer or prepolymer does not leak, run, ooze, etc., therefrom. Such seal would also tend to reduce the loss of polar solvent therefrom.

To the above-noted amine curable polymer or prepolymer can be added various agents to improve the adhesive bond thereof between the tread and the substrate. For example, various conventional adhesive compounds which are compatible with the amine curable polymer or prepolymer can be utilized. Such adhesive agents or compounds are generally known to the art and to the literature and include various epoxies, various polyacrylates, and the like. The amount of such compounds is sufficient to achieve a desired adhesion between tread 20 and substrate 12.

The invention will be better understood by reference to the following examples.

EXAMPLE 1

Tire: A Firestone PA 2000 Steel Cord Radial 295/75R22.5

The tire was buffed so specification (RMA 3 to 4) using a Cincinnati truck tire buffer. A universal trailer precured tread manufactured by Pro-Tread was cut to the correct length (as determined by the circumference of the tire). The tread width was 8" and was made of a blend of poly(styrene-butadiene) and polybutadiene. The tread was washed with gasoline to remove the preapplied black rubber cement. The tread was allowed to dry thoroughly and then buffed with a wire brush on a 7500 rpm Uryu buffer. The tire carcass and tread were then washed with acetone on Rymplecloth until only a faint grey color was removed by the washing procedure. The tire carcass and tread were allowed to dry thoroughly (about 15-30 minutes). Both the tire carcass and tread were then treated with 3 coats of primer (approximately 1.5 - 2.0 percent trichloro-S-triazinetrione in butyl acetate). The tire carcass and tread were allowed to dry thoroughly once again for at least 15-30 minutes. After the drying period, several pieces of duct tape were reversed, rolled and used to tape (blot) the surface of the tire carcass and tread in order to remove the traces of contaminates (brush hairs, cloth fibers and rubber particles). The amine curable urethane polymer adhesive was then mixed. The adhesive or kit contained the following separated components.

|  | A-SIDE |  | B-SIDE |
|---|---|---|---|
| Adiprene L 367 | 150 gms. | Caytur 21 | 72 gms |
| Adiprene L 42 | 150 gms. |  |  |
| Flexol 4GO | 30 gms. |  |  |
| Acetone | 30 gms. |  |  |

Three kits were mixed simultaneously. After complete mixing, the kits were allowed to thicken to a non-flowing stage. The adhesive was then spread onto the tread and the tire carcass. The tread was then assembled onto the tire carcass making sure no air was trapped under the tread. The end or splice was stapled together and the tread held in place with duct tape. The tire was allowed to cure overnight (13 hours) at relatively cool temperatures, i.e., approximately 10-15° C. The adhesive was not fully cured due to the cool overnight conditions. Hence, the tire was placed into a pressurized steam chamber with the temperature being raised to 90° C (this required about 30 minutes to accomplish). The tire was then cured at 90° F for one hour. The tire was removed from the chamber and the staples and tape removed. An excellent appearing retreaded tire was produced.

EXAMPLE 2

Tire: A Bridgestone 10.00 R20 Steel Belted Radial

The tire was buffed to a 125 3/8" circumference (an RMA 3 to 4). The tread was a universal trailer precured tread produced by Pro-Tread. It was cut to the correct length (as determined by the circumference of the tire). The tread width was 8". The tread was thoroughly washed with gasoline to remove the preapplied black rubber cement (this cement would not be present on a tread if this process were done as a commercial operation). The tread was allowed to dry thoroughly and then buffed was a tungsten carbide tip curved cup rasp (16 grit) using a 7200 rpm Uryu buffer. The tire carcass and tread were then cleaned by washing with acetone on Rymplecloth until only a faint grey color was removed by the washing procedure. The tire carcass and tread were once again allowed to dry thoroughly (about 15-30 minutes). Both the tire carcass and tread were then treated with three coats of primer (approximately 1.5 -2.0 percent trichloro-S-triazinetrione in butyl acetate). The tire carcass and tread were allowed to dry once again for about 15-30 minutes. After the drying period, several pieces of duct tape were reversed, rolled and used to tape (blot) the surface of the tire carcass and the tread in order to remove the traces of contaminates (brush hairs, cloth fibers, and rubber particles). An adhesive kit was then mixed. The adhesive kit was the same as in Example 1. Four kits were mixed simultaneously. After complete mixing, the kits were allowed to thicken to a non-flowing stage. The adhesive was then spread onto the tread and the tire carcass. The tread was then assembled onto the tire carcass, making sure no air was trapped under the tread. The end or splice was stapled together and the tread held in place with several pieces of duct tape. The tire was then placed in a Vulcan steam chamber and cured one hour at 90° C. With respect to retreaded tires, the tire looked excellent after cure.

While in accordance with the patent statutes, the best mode and preferred embodiment has been set forth, the scope of the invention is not limited thereto, but rather by the scope of the attached claims.

## Claims

1. An elastomer tread adhered to an article, comprising:
a cured elastomer substrate, a cured elastomer tread, and an adhesive laminate, said adhesive laminate adhering said elastomer tread to said elastomer substrate, said adhesive laminate containing a plurality of treating agent layers and at least one cured amine curable polymer or prepolymer layer, said amine curable polymer or prepolymer cured at an ambient or a relatively low temperature.

2. An elastomer tread adhered to an article according to Claim 1, wherein said amine curable polymer or prepolymer is an epoxy resin, a halogen-containing hydrocarbon polymer, a chlorosulfonated polymer, polymers containing acid halide groups such as

$$-\overset{\overset{\textstyle O}{\|}}{C}-Cl$$

or haloformate groups such as

$$-O-\overset{\overset{\textstyle O}{\|}}{C}-Cl;$$

polymers containing anhydride groups which, upon reaction with diamine, yield amide-acid linkages, organopolysiloxanes, urethane polymers or prepolymers, or combinations thereof, wherein said amine curable polymer or prepolymer is cured with an amine curing agent, wherein said cured amine curable polymer or prepolymer contains said amine curing agent and an optional polar solvent.

3. An elastomer tread adhered to an article according to Claim 2, wherein said treating agent layer is made from an N-halohydantoin, an N-haloamide, an N-haloimide, an N-halosulfonamide, or combinations thereof.

4. An elastomer tread adhered to an article according to Claim 3, wherein said amine curable polymer or prepolymer is said urethane polymer or prepolymer, wherein said amine curing agent is (a) 4,4´-methylene bis(2-chloroaniline), (b) a complex of 4,4´-methylene dianiline and a salt, said salt being selected from the group consisting of sodium chloride, sodium bromide, sodium iodide, sodium nitrite, lithium chloride, lithium bromide, lithium iodide, lithium nitrite, and sodium cyanide, (c) a complex of racemic 2,3-di-4(aminophenyl)butane with a salt, said salt selected from the group consisting of sodium chloride, sodium bromide, sodium iodide, potassium chloride, potassium bromide, potassium iodide, cesium chloride, cesium bromide, and cesium iodide.

5. An elastomer tread adhered to an article according to Claim 4, wherein said treating agent is monochloroisocyanuric acid, dichloroisocyanuric acid, trichloroisocyanuric acid, or combinations thereof, wherein said ambient temperature is from about 10° to about 50° C, and wherein said relatively low temperature is from said ambient temperature up to about 150° C.

6. An elastomer tread adhered to an article according to Claim 5, wherein said elastomer substrate is a tire, wherein said elastomer tread is a rubber tread for said tire, wherein said adhesive laminate has two treating agent layers, one of said treating agent layers adhered to said tire substrate, said remaining treating agent layer adhered to said tread layer, said cured amine curable polymer or prepolymer adhered to said substrate treating agent and to said tread treating agent.

7. An elastomer tread adhered to an article according to Claim 6, wherein said curing agent is said salt complex of 4,4´-methylene dianiline, and wherein said salt is sodium chloride.

8

8. An elastomer tread adhered to an article according to Claim 7, wherein said elastomer tread is made from monomers of conjugated dienes having from 4 to 12 carbon atoms, comonomers of conjugated dienes having from 4 to 12 carbon atoms and vinyl substituted aromatic compounds having from 8 to 15 carbon atoms, natural rubber, and combinations thereof.

9. An elastomer tread adhered to an article according to Claim 7, including said polar solvent, said polar solvent having a dipole moment in excess of 0.4 debye in which there are no more than a total of 8 methyl, methylene, or tertiary carbon radicals per polar group contained in said solvent.

10. An elastomer tread adhered to an article according to Claim 4, wherein said cured elastomer substrate is an off-the-road tire.

11. An elastomer tread adhered to an article according to Claim 9, wherein said cured elastomer substrate is an off-the-road tire.

12. A process for applying a cured elastomer tread to a cured elastomer substrate, comprising the steps of:
applying a treating agent to the cured elastomer substrate;
applying a treating agent to the cured elastomer tread;
applying an amine curable polymer or prepolymer to at least one of said cured elastomer substrate or tread; and
applying said tread to said substrate and curing said amine curable polymer or prepolymer at an ambient or a relatively low temperature.

13. A process according to Claim 12, wherein said treating agent is an N-halohydantoin, an N-haloamide, an N-haloimide, an N-halosulfonamide, or combinations thereof.

14. A process according to Claim 13, wherein said amine curable polymer or prepolymer is an epoxy resin a halogen-containing hydrocarbon polymer, a chlorosulfonated polymer, polymers containing acid halide groups such as

$$-\overset{\displaystyle O}{\overset{\displaystyle \|}{C}}-Cl$$

or haloformate groups such as

$$-O-\overset{\displaystyle O}{\overset{\displaystyle \|}{C}}-Cl;$$

polymers containing anhydride groups which, upon reaction with diamine, yield amide-acid linkages, organopolysiloxanes, urethane polymers or prepolymers, or combinations thereof, wherein said amine curable polymer or prepolymer is cured with an amine curing agent, wherein said cured amine curable polymer or prepolymer contains said amine curing agent and an optional polar solvent, and wherein said ambient and low temperature is from about 10° to about 150° C.

15. A process according to Claim 14, wherein said amine curable polymer or prepolymer is said urethane polymer or prepolymer, wherein said amine curing agent is (a) 4,4'-methylene bis(2-chloroaniline), (b) a complex of 4,4'-methylene dianiline and a salt, said salt being selected from the group consisting of sodium chloride, sodium bromide, sodium iodide, sodium nitrite, lithium chloride, lithium bromide, lithium iodide, lithium nitrite, and sodium cyanide, (c) a complex of racemic 2,3-di-4(aminophenyl)butane with a salt, said salt selected from the group consisting of sodium chloride, sodium bromide, sodium iodide, potassium chloride, potassium bromide, potassium iodide, cesium chloride, cesium bromide, and cesium iodide, and wherein said polar solvent has a dipole moment in excess of 0.4 debye in which there are no more than a total of 8 methyl, methylene, or tertiary carbon radicals per polar group contained in said solvent.

16. A process according to Claim 15, wherein said treating agent is monochloroisocyanuric acid, dichloroisocyanuric acid, trichloroisocyanuric acid, or combinations thereof, wherein said curing agent is said salt complex of 4,4'-methylene dianiline, and wherein said salt is sodium chloride.

17. A process according to Claim 12, including applying said amine curable polymer or prepolymer to said cured elastomer substrate and to said cured elastomer tread.

18. A process according to Claim 14, including applying said amine curable polymer or prepolymer to said cured elastomer substrate and to said cured elastomer tread, and wherein said substrate is a tire.

19. A process according to Claim 16, including applying said amine curable polymer or prepolymer to said cured elastomer substrate and to said cured elastomer tread.

20. A process according to Claim 16, including applying said amine curable polymer or prepolymer to said cured elastomer substrate and to said cured elastomer tread, and wherein said substrate is a tire.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 154 166 (THE FIRESTONE TIRE AND RUBBER CO.) * Claims 1,3-5,7,8,10-14 * --- | 1-20 | C 08 J 5/12<br>B 60 C 21/00<br>B 29 D 30/56 |
| Y | EP-A-0 123 070 (THE FIRESTONE TIRE AND RUBBER CO.) * Claims * & US-A-4 544 427 (Cat. D) --- | 1-20 | |
| Y | EP-A-0 025 904 (THE FIRESTONE TIRE AND RUBBER CO.) * Claims 1,2,4,6,8-13,17,20 * & US-A-4 399 852 (Cat. D) ----- | 1-20 | |
| | | | **TECHNICAL FIELDS SEARCHED (Int. Cl.4)**<br><br>C 08 J<br>B 60 C<br>B 29 D |

The present search report has been drawn up for all claims

| Place of search | Date of completion of the search | Examiner |
|---|---|---|
| THE HAGUE | 23-02-1989 | BETTELS B.R. |